# EUROPEAN PATENT SPECIFICATION

(11) **EP 2 235 389 B1**
(45) Date of publication and mention of the grant of the patent: **30.11.2011**
(21) Application number: 08859464.3
(22) Date of filing: 12.12.2008
(51) Int. Cl.: F16B 25/10

(54) **A FIXING DEVICE**
BEFESTIGUNGSVORRICHTUNG
DISPOSITIF DE FIXATION

(30) Priority: 12.12.2007 GB 0724219
(43) Date of publication of application: 06.10.2010
(73) Proprietor: Excalibur Screwbolts Limited, Hockley SS5 5JU (GB)
(72) Inventor: BICKFORD, Charles, Hockley SS5 5JU (GB)
(74) Representative: Humphrey-Evans, Edward John
(86) International application number: PCT/GB2008/004117
(87) International publication number: WO 2009/074813

(56) References cited:
- CA-A1- 2 304 994
- FR-A- 2 523 665
- GB-A- 2 386 405
- JP-A- 7 019 218

## Description

The invention relates to a fixing device having particular, but not exclusive, application in fixing to timber, plastics materials and friable substrates, such as timber end grain, plywood, blockboard and sterling board edge face, MDF and other particle board (for example chipboard or fibre board), light-weight autoclaved aerated concrete in, for example block form (for example of the type sold under the trade marks "Thermalite", "Celocon" and "Durox"), plaster, render, soft red brick, breeze (for example breeze blocks) and other friable masonry substrates.

Conventional threaded fixing devices such as screws are difficult to secure in masonry substrates since it is difficult for a conventional thread to find secure location within a bore in such a substrate. Conventional screw thread fixings are accordingly conventionally secured within bores in masonry substrates by first lining the bore with a lining of relatively soft material into which the threaded fixing can cut its own thread, at the same time compressing the lining against the walls of the bore within the masonry substrate. A typical example of such a lining is that sold under the trade mark Rawlplug. Such linings are available in fibrous and plastics material form and in a wide variety of configurations reflecting a very considerable activity in the art over the years to improve upon the security and ease of use of screw threaded fixing devices used with such liners.

Adopting a somewhat similar principle, alternative forms of fixing device are of metallic material and structured so as to be expansible after introduction into a bore in a masonry material whereby compressive forces against or impingement into the internal surfaces of the bore resist withdrawal of the fixing device from the bore. Reflecting similarly substantial activity in the art, a wide variety of such devices is available. For example, various devices of this kind are available under the above-mentioned trade mark Rawlplug and under the trade marks Fischer and Hilti.

The "Upat TPO" self undercutting anchor comprises an internally threaded cylindrical tubular steel sleeve and a cone received in one open end of the sleeve. A splined lower part of the cylindrical sleeve is in contact with the inclined walls of the cone, these walls being divergent in the direction away from the sleeve. The above described assembly is inserted into a pre-drilled bore until the extremity of the cone (ie the base of the conical portion) comes into contact with the end of the bore. Application of light pressure from a hammer drill causes the splined section to be forced over the conical surface, the splines having tungsten carbide tips which undercut the substrate material. The Upat EXA Express Anchor also operates an expansion fixing but does not operate on the undercutting principle.

Fixing devices somewhat similar to those sold under the trade mark Rawlplug are also sold under the trade mark Fischer, as mentioned earlier. Fixing devices are also made by Fischer which are somewhat similar in structure and operation to the above-described Upat fixing elements. The Fischer Wallbolt comprises a segmented malleable iron expander shield forming a sleeve about an orthodox screw threaded bolt. The combined assembly is in use inserted into a pre-drilled bore in a masonry substrate and the bolt is tightened with a spanner. This draws a terminal conical wedge backwards into the shield and forces four shield segments outwardly against the sides of the bore.

All fixing elements which rely on compression of an associated member into the wall of a pre-drilled bore give rise to structural disadvantages. The walls of the bore are placed under stress and in many substrate materials there is insufficient strength in the substrate structure to prevent cracking. This is particularly the case with such materials as lightweight autoclaved aerated concrete but also applies to brick structures. It is especially evident adjacent apertures in a masonry structure where on one side at least there will be comparatively small thickness of substrate material. Of course, fixing elements are commonly required in aperture regions for the fixing of window frames, door liners and similar fittings.

Equally, a good deal of activity has been focused on improvement of screw threaded members themselves in order that they should find secure fixing in masonry materials without the use of liners and without internal expansion. The driving force in these respects is, of course, the fact that liners do not provide totally satisfactory degrees of security, the fact that the need to insert a liner in a bore represents an additional activity which has associated labour costs and the fact that in the case of expansion bolts and such like the compressive forces necessary for security of fixing can result, as noted above, in rupture of masonry materials particularly when adjacent to extremities of bodies of such materials.

UK Patent Specfications Nos 2 115 511 (ITW III) and 2 152 171 (ITW II) disclose masonry fixings comprising a shank having spaced threads in the form of a helical ridge alternating with a parallel land. The flanks of the threads intersect at an angle of 50° to 65° and exhibit a helix angle of 6° to 8.5°. These features are necessarily combined with special conditions for introduction into a masonry bore and are claimed to provide security of fixing without thread striping upon insertion. Both ITW II and III represent examples of effort in the art to provide threaded devices for direct securement in a bore so as to avoid the disadvantages of expansion-type devices enumerated above.

Coarse deep threads are also disclosed in a fixing for use in masonry-like structures in UK Patent Specification No 1 510 686 (ITW IV), a further example of an attempt to provide a direct-fixture fixing element. In this particular arrangement, the crests of the deep threads are notched in order to assist in the cutting of a thread by the fixture in use and to assist in the transmission of masonry debris within the bore. An intermediate shallower thread ridge appears to be the key to providing a design which enables security of fixture to be achieved whilst at the same time recognizing the need to minimize disturbance of the substrate material. Nevertheless, threads penetrate the substrate at fairly closely spaced positions such that pull-out performance is impaired by the shear resistance of the relatively small sections of substrate material between helical ridge turns. A similar arrangement is disclosed in European Patent Application No 0 133 773 (ITW I).

UK Patent Specification No 466039 (Jasper) discloses a fastening screw having a shank provided with a helical thread groove alternating with a land between the grooves. A longitudinal slot provides self-tapping capacity for the coarse deep thread. Jasper dos not disclose the fastening screw for use in friable masonry, timber or other friable material structures.

A somewhat similar screw device is described in UK Patent Specification No 274833 (Rosenberg). The entry end screw thread configuration has a groove which penetrates the normal diameter of the fixing device together with the raised border ridges, this configuration extending over a short length only of the shank. Rosenberg does not recommend the fixing device for masonry fixing, referring generally to fibrous and non-flowing materials and in particular to metal substrates.

European Patent Specification No 0 225 0003 (JSM) and UK Patent Application No 2036227 (Tomoyasu) disclose self-locking screws having a somewhat similar configuration. Helical ridges either side of a small land have their crests grooved. Tomoyasu also refers to a structure in which the ridge crests are not grooved but an intermediate ridge is turned through the land so that there are in fact two parallel grooves forming an overall thread. Both JSM and Tomoyasu relate to self-locking devices reliant on the interaction of male and female threads and there is no disclosure of a use in which the male threaded portion is self-tappingly threaded into a masonry bore.

UK Patent Specification No 2042120 (Gutshall) discloses a headed screw which incorporates a long-pitch helical thread rolled on a cylindrical blank. The rolling leaves untouched a land between adjacent convolutions of the thread. At each juncture between the root of the thread and adjacent land a helical crest functioning as an auxiliary thread is provided to improve the holding power of the screw. Gutshall does not appear to recommend the disclosed headed screw for fixture self-tappingly in a masonry substrate.

UK Patent Specification No 1541237 (Oratonics) discloses a threaded device for use as an endodontic stabilizer. The shank of the disclosed device is turned with a helical groove having a sufficiently wide pitch to provide a parallel inter-turn land. The crest of the ridge is grooved. UK Patent Specification No 1519139 (Crock) discloses a simpler structure for use in surgical techniques. The structure disclosed comprises a threaded shank comprising a thread groove somewhat reminiscent of that shown by Rosenberg as mentioned above. Crock refers skirtingly and somewhat speculatively to application in building construction and associated fields but there is no reference specifically to the use of the disclosed device for self-tappingly securing in a friable masonry bore.

In PCT Application No WO 92/10688, fixing to masonry substrates (for example brickwork, blockwork or concrete) involves forming a bore in the substrate (for example in the tension zone or compression zone of a concrete load-supporting member such as a concrete beam) for a fixing device, introduced into the bore self-tappingly or otherwise, which comprises a shank having a bore entry end and an opposed optionally headed end separated from the bore entry end by the length of the shank, at least a portion of the shank length being configured with a thread rolled helical groove depressed into the blank circumference of the shank so as plastically to displace shank material to at least one side of the groove sides, the groove being defined adjacent a helical ridge juxtaposed to a side of the groove between a pair of parallel helical ridges juxtaposed one either side of the groove and formed in either case of the plastically displaced shank material. The ridges are upstanding from the blank circumference of the shank so as to function in use each as a male thread, at least the leading end of the thread preferably being a female thread-cutting male thread in relation to the masonry. The helical ridges and defined helical groove form a helical configuration whose convolutions are spaced apart by an intervening land in relation to which the ridges are raised and the groove is depressed. The land has width measured axially with respect to the shank of at least 50% of the land shank diameter and the helix angle of the helical ridge is at least 8**°** and preferably 10**°** or more. The fixing device is ordinarily inserted into a slightly oversized bore (and thus the shank of the device will be slightly undersized in terms of diameter relative to the drill diameter used to produce the bore). The fixing device disclosed in WO 92/10688 is not particularly suitable for use with end-grain timber applications.

GB2 344 629, which is the Applicant's granted patent, discloses an improved fixing device having a three thread helical thread arrangement, wherein the outer threads are smaller in height that the central thread and each of the sets of three parallel threads are separated by land gaps. Each thread has an helical angle of between 30 and 50 degrees. The fixing device of GB 2 344 629 is not particularly suitable for use with very soft substrates such as end grain

GB 2 386 405, which is the Applicant's granted patent discloses a thread rolled fixing device having a pair of spaced apart helical ridges, wherein the height of the ridges is increased from zero to full height over the first full turn and then from full height to zero height over the last full turn. The fixing device of GB 2 386 405 is not particularly suitable for use with very soft substrates such as end grain timber.

US5531553, which is the Applicant's patent, discloses a masonry fixing device which comprises a steel shank which in the form of the blank is right circular cylindrical form. A ridge-groove-ridge configuration extends helically along the lower portion of shank and comprises a pair of parallel opposed ridges upstanding from an adjacent land. Each ridge defines with the adjacent ridge a groove. At least the forward end of the lower portion of shank is configured so as to provide a self-tapping facility. In use, the fixing device is introduced into a pre-drilled bore in a masonry substrate such as brickwork by turning so as to form a thread on the interior walls of the bore. The axial dimension of the land is at least 50% of the blank diameter with the result that relatively large amounts of substrate material are disposed between the ridge-groove-ridge configurations when the fixing device is in place. The fixing device of US5 531553 is not particularly suitable for use with very soft substrates such as end grain timber.

Many modern and some traditional construction materials are friable in nature and do not support high pull-out strengths for fixing devices fixed in them. The reasons for this are manifold. For example, in many friable materials a fixing will not self-thread into a predrilled bore because the initial turns of the fixing do not start a helical channel in the bore, but simply enlarge the outer extremity of the bore by abrasion of substrate material. Many devices which can be threaded into a bore self-tap but have a propensity for over-torque damage, the bore increasing in cross-section over its length to that of the circumference of the threaded surface of the fixing. These problems are particularly prevalent in autoclaved aerated concrete such as in building block form, but are also found when fixing to such traditional materials as soft red brick (and bricks made of differently coloured fired clays) and plasters and render made of eg lime plaster/render mixes. Timber substrates pose different problems, but in many cases pull-out strength requirements means that a fixing must pass through a timber member and be secured by a nut on a face opposed to the face through which the fixing is introduced, the latter normally being engaged by a head of the fixing. This means certain constraints when fixing together two members where one face is inaccessible for securement of a nut. Timber end grain is notoriously poor as a fixing base for a fixing device. This is indeed so much so that it is rare to rely solely on screw thread engagement in timber end grain in any real life situation; of course, nut securement is usually precluded in the case of fixings in timber end grain.

The present invention therefore seeks to provide a fixing device for fixing to end grain timber, plastics materials and friable substrates which overcomes, or at least reduces some of the above-mentioned problems of the prior art.

Accordingly, in a first aspect, the invention provides a fixing device for fixing to timber, plastics materials and friable substrates, the fixing device comprising a shank having a first end and a second end, the shank comprising helically extending first, second and third parallel threads, wherein the first, second and third parallel threads are upstanding from the shank and are in spaced apart arrangement to each other and the height of each thread above the shank is equal to the other.

Preferably wherein the groove width (C) of the first, second and third parallel threads is equal to the anchor size of the fixing device. One advantage is that having all threads identical heights and an increased groove width improves tensile performance on softer substrates such as end grain timber.

Preferably wherein the helical angle of each of the first, second and third parallel threads may be between 33° and 44°.

Also preferably where the major diameter (A) of the first, second and third parallel threads may be between approximately 128% and 131% of the groove width (C) of the fixing device.

One advantage is that an increased helical height ensures hammer drive insertion in end grain applications and substrate stability in low grade materials and an increased helical angle ensures a faster fix. The increased height of the threads can gain deeper penetration into the substrate and therefore increasing the tensile loading.

Also preferably wherein the size of a land gap between the first, second and third parallel threads is equal to the specific thread height, which is approximately 15% of the groove width (C), multiplied by the tangent of the helical angle, wherein this result is then subtracted from the screw pitch (D) minus the groove width (C).

Also preferably, wherein the shank diameter (E) is approximately 95% of the groove width (C), as a smaller shank diameter prevents binding when using HSS drills in timber applications.

Further preferably, further comprising an increase in height of the lead in thread from 0.00 to full height over the first half turn. Therefore, the threads are less likely to lose their cutting edge, especially cutting into dense concrete and are less likely to flatten, as happens in known devices.

Also preferably wherein there may be a reduction in height of the lead out thread from full height to 0.00 over the last half turn. Reduction of the height of the threads in the last half turn reduces the amount of torque required to turn the device into a substrate.

Preferably further comprising a head at one end of the shank and also wherein the head further comprises an annular flange, wherein the annular flange further comprises radial serrations and longitudinal raised ridges. The serrations and longitudinal ridges ensure than the fixing device does not unwind under tension after installation.

Preferably wherein the annular flange has a flange angle of approx 140 degrees and further preferably wherein the head has an X definition for hammer insertion.

One embodiment of the invention will now be more fully described, by way of example, with reference to the drawings, of which:
Figure 1 is a diagram showing a fixing device according to one embodiment of the present invention;
Figure 2 is a diagram showing a view of the fixing device of Figure 1 in the direction shown by arrow X in Figure 1;
Figure 3 is a diagram of a cross section of the head of the fixing device of Figure 1 and shows a flange angle of the head flange of the fixing device of Figure 1;
Figure 4 is a diagram of view along arrow "W" of Figure 1 and shows the anti rotation locking serrations of the hole locking feature of the fixing device of Figure 1;
Figure 5 is a diagram showing a portion, on an enlarged scale, of a cross section of the fixing device shown in Figure 1 which shows the thread angles of the threads of the fixing device of Figure 1; and
Figure 6 is a diagram showing the dimensions of the features of the fixing device of Figure 1.

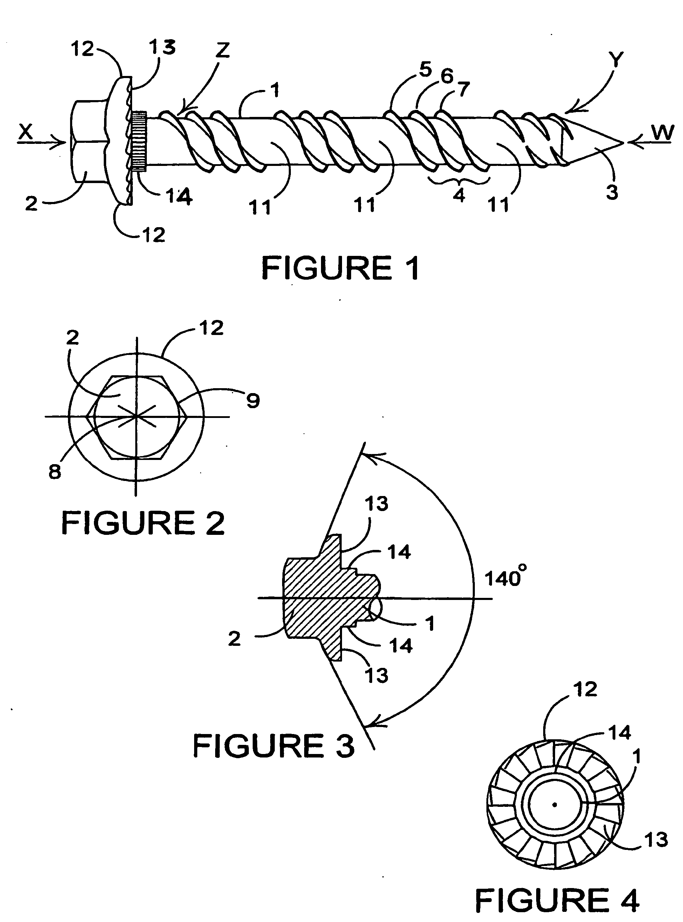

In a brief overview of one embodiment of the present invention, there is shown in Figure 1 a fixing device. The same numbering is used throughout the Figures for the same features, where appropriate. The Fixing device comprises a bright zinc plated steel shank 1 of solid right circular cylindrical form. The shank 1 is formed by cold forming with a head 2, which is described in more detail with reference to Figure 2 following. The end 3 of the shank 1, opposed to the head 2, is formed as a gimlet or cone point, this is to assist in the insertion of the tip of the shank into a substrate without the need for a pre-formed hole, or bore. This enables the fixing device to be self-tapping. The end 3 could also be chamfered.

The shank 1 is formed by thread rolling with a helical bore wall engagement configuration 4. The configuration 4 is formed from three spaced apart helical ridges 5, 6, 7. All three helical ridges are formed on shank 1 with identical helix angles with the result that the ridges are therefore parallel to each other and separated by the same pitch throughout the extent of the helix. All three ridges 5, 6, 7 serve as a screw thread for fixing the device in bore in an appropriate substrate, such as end grain timber.

All three ridges 5, 6, 7 are frusto-conical in cross section and the turns of the helical bore wall configuration 4 are separated by turns of helical land 11.

Ridge 5 defines with ridge 6 a helical groove (not shown), the depth of which is equal to the displacement required to raise the each thread and may either be at the level of the shank 1 or up to 0.5mm into the shank 1 and obviously varies anchor size to anchor size. The angle of this groove is between 30° to 50°.

All three ridges 5, 6, 7 has an upstand from the surface of the shank 1 which is uniform throughout the helix, apart from half of the lead in thread (at point Y) which is tapered from zero (0.00) height to full height on the first half pitch to ensure positive insertion into the substrate. Also, the thread run out (at point Z) is tapered from full height to a height of 0.00 on the last half pitch which ensures square-ness of the head 2.

By having the thread tapered at point Y, the first convolution of the thread therefore only cuts the substrate to a reduced depth, as compared to known threads which perform a full depth cut by the first convolution, so that the following convolution of the thread also has some cutting to perform. Therefore, the threads are less likely to lose their cutting edge, especially cutting into dense concrete and are less likely to flatten, as happens in known devices. The increased height of the threads can gain deeper penetration into the substrate and therefore increasing the tensile loading.

Reduction of the height of the threads 5, 6, 7 at point Z reduces the amount of strain exerted on the material of the device, so that the strength of the device, particularly at the point where the shank 1 meets the head 2 is improved. Reduction of the depth of the groove also reduces any such weaknesses. The torque applied to the device by operatives during installation can therefore be increased without compromising the integrity of the fixing.

The lead threads (At point Y) may also be serrated for use with soft substrates but these serrations would not be appropriate for timber use.

Also shown is a hole locking feature which comprises a head flange 12 on which are formed anti rotation locking serrations 13 as well as a short section of raised longitudinal ridges 14 formed on the shank 1, and are described further following with reference to Figures 3 and 4. The serrations 13 and longitudinal ridges 14 ensure than the fixing device does not unwind under tension after installation.

Figure 2 is a diagram showing a view of the fixing device of Figure 1 in the direction shown by arrow X in Figure 1. There is shown a head 2 is a conventional hexagonal form comprising six faces 9 intended for location into the jaw of an open spanner of complimentary size and shape by a suitable socket or ring spanner. The head 2 has an "X" shaped slot 8 to suit hammer drive insertion for permanent fix into timber applications. Obviously, however, the head 2 may be formed with a different type of head such as a countersink head, conventionally slotted as for a conventional blade screwdriver engagement or formed with a Posidrive™ screw engagement depression.

Figures 3 is a diagram of a cross section of the head of the fixing device of Figure 1 and shows a flange angle of the head flange of the fixing device of Figure 1. There is shown a cross section of a fixing device where the shank 1 and the head 2 can be seen. Also shown is the form of the head flange 12, the back face of the head where the anti rotation location locking serrations 13 are formed, as well as the form of the short section of raised longitudinal ridges 14. The flange angle is shown as 140°.

Figure 4 is a diagram of view along arrow "W" of Figure 1 and shows the anti rotation locking serrations 13 of the hole fixing feature of the fixing device of Figure 1. Also shown is the form of the head flange 12, the form of the shank 1, as well as the form of the short section of raised longitudinal ridges 14.

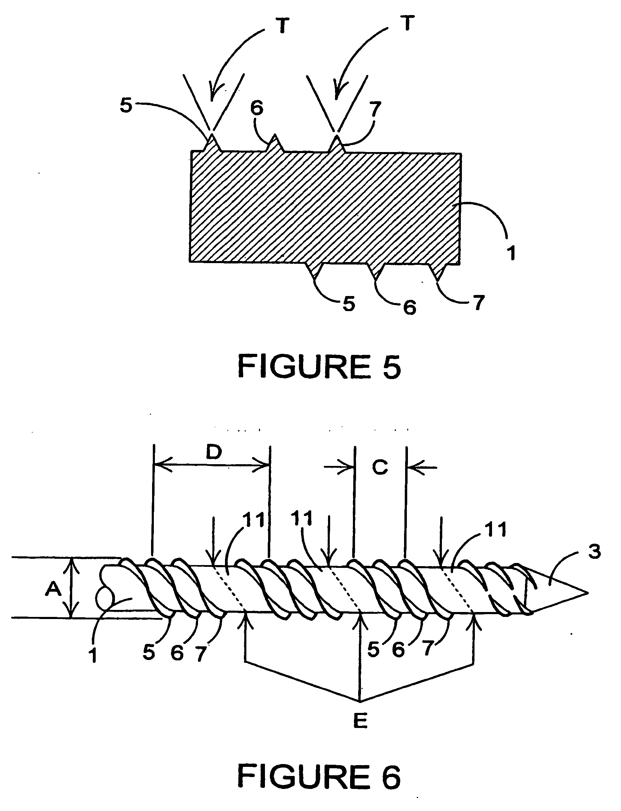

Figure 5 is a diagram showing a portion, on an enlarged scale, of a cross section of the fixing device shown in Figure 1 which shows the thread angles of the threads of the fixing device of Figure 1. There is shown a portion of the shank 1 and ridges 5, 6 and 7. The thread helix angle is indicated by the "T" and is approximately 33° to 44°.

Figure 6 is a diagram showing the dimensions of the features of the fixing device of Figure 1. The fixing device of the present invention may be made in a range of sizes. The particular parameters of a fixing device will vary according to the "anchor size" of the fixing device, where the "anchor size" relates to the diameter of the drill used to create the bore of the hole used to install the device. In Figure 1, there is shown a shank 1, ridges, or threads 5, 6 and 7, an end 3, as well as helical land 11. Also shown are the dimensions of the various features of the fixing device are indicated by the points marked A, C, D and E.

Table 1 below indicates some suggested dimensions, in some cases minima and maxima, for the dimensional parameters signified by the letters A, C, D and E.

**Table 1 is a table showing the possible dimensions of the fixing device in mm.**

| **Anchor** | **A** | | **C** | **D** | **E** | **Pre-form blank diameter** | |
|---|---|---|---|---|---|---|---|
| **Size** | **Major** | **Diameter** | **Groove** | **Screw** | **Shank** | | |
| | **min** | **max** | **width** | **Pitch** | **Diameter** | **min** | **max** |
| **6mm** | 7.70 | 7.88 | 6.00 | 13.39 | 5.73 | 5.64 | 5.68 |
| **8mm** | 10.26 | 10.50 | 8.00 | 17.85 | 7.62 | 7.52 | 7.57 |
| **10mm** | 12.83 | 13.13 | 10.00 | 22.32 | 9.51 | 9.39 | 9.46 |
| **12mm** | 15.40 | 15.76 | 12.00 | 26.78 | 11.40 | 11.27 | 11.35 |
| **14mm** | 17.96 | 18.38 | 14.00 | 31.24 | 13.29 | 13.15 | 13.24 |
| **16mm** | 20.53 | 21.01 | 16.00 | 35.71 | 15.19 | 15.03 | 15.14 |

A is the major diameter of the fixing device. C is the groove width, which is the distance between the first and third threads, 5 and 7. D is the screw pitch, which is the distance between the middle threads 6 on each turn. E is the diameter of the shank 1. The "pre-form blank diameter" is the size required to generate the thread outside diameter of the specified anchor size during the cold rolling operation.

The total thread height of a single thread 5 is between approximately 128% and 131% of the nominal Anchor Size, for example the maximum nominal major thread diameter (A) on a 6mm anchor equals 6.00mm plus 1.86mm (31% of 6mm), which equals 7.86mm. Therefore a single thread 5 rises up, at a maximum, to approximately 15% of the nominal anchor size above the shank 1.

The land gap 11 can be derived by multiplying the specfic thread height (15% of the nominal anchor size) by the tangent of the thread angle and subtracting that from the screw pitch minus the groove width ("D" minus "C").

The shank diameter (E) is approximately 95% of the anchor size.

As can be seen from the table above, the groove width (C) is equal to the anchor size as this relates to the bore hole size and its installation into the bore hole, which is described further below.

Although bore holes are usually pre-drilled, the hole diameter is at most that of a shank 1, so that the threads must cut into the substrate. By reducing the torque needed to turn the device, it becomes much easier to insert the device into the substrate thereby reducing the amount of strain exerted on the material of the device (usually steel), so that its integrity is maximised. Binding of the device to the substrate material during installation is also minimised.

Fixing elements according to the present invention can be manufactured by the steps of cold-forging and thread rolling, bright-plate zinc plating and heat treatment without the need to resort to complex assembly operations such as are normally associated with an expansion bolt.

A fixing device according to the invention, such as that shown in Figures 1 to 6 of the drawings in use would be offered up to a pre-drilled bore and its tip is inserted into the mouth of the bore. The fixing device is then rotated manually a number of times until the threads 5, 6 7 start to engage by tapping a corresponding female thread in the outer portions of the wall of the bore. This practice is continued until finger turning becomes impractical. A screwdriver or spanner as appropriate is then taken by the operator, engaged with the head of the shank 1 and further turning then effected. The threads 5, 6, 7 continues, with this motion, to form its own female thread with gradually increasing extent along the length of the internal surface of bore until the shank 1 is completely received in bore.

It will be appreciated from the foregoing that the invention is simple to use in practice, the fixing device readily self-tapping when turned into a bore in a variety of materials. The device holds firmly in timber end grain and on continued turning its head, if any, will perforate and embed in the timber. No amount of torque will cause the device to ream the bore of an autoclaved aerated concrete bloc, but rather self-threading penetration continues. Over-torquing is per se impossible in soft red bricks. Under ultimate tensile loads in all substrates the product does not fail or cone out the substrate. As the tensile load is increased the bolt starts to withdraw but as each convolution of the thread emerges the following convolution takes the tensile load back to its ultimate. This gives the product a fail safe characteristic. When hammered into a predrilled hole into end and cross grained timer the bolt turns on impact and cuts its own thread perfectly into the timber. The clamping force timber to timber is excellent in both end and cross grain situations. It will replace the necessity to use standard nuts and bots. The fixing device of the present application can be removed by unscrewing even though it has been hammered in.

It will be appreciated that although only one particular embodiment of the invention has been described in detail, various modifications and improvements can be made by a person skilled in the art without departing from the scope of the present invention.

## Claims

1. A fixing device for fixing to timber, plastics materials and friable substrates, the fixing device comprising: a shank (1) having a first end (2) and a second end (3), the shank comprising helically extending first (5), second (6) and third (7) parallel threads (4) to form a triple threaded configuration, wherein the first, second and third parallel threads are upstanding from the shank and are in spaced apart arrangement to each other and the height of each thread above the shank is equal to the other.

2. A fixing device according to claim 1, wherein the groove width of the first, second and third parallel threads is equal to the anchor size of the fixing device.

3. A fixing device according to any preceding claim wherein the helical angle of each of the first, second and third parallel threads is between 33° and 44°.

4. A fixing device according to any preceding claim, where the major diameter (A) of the first, second and third parallel threads is between approximately 128% and 131% of the groove width (C) of the fixing device.

5. A fixing device according to either claim 3 or claim 4, wherein the size of a land (11) gap between the first, second and third parallel threads is equal to the specific thread height, which is approximately 15% of the groove width (C), multiplied by the tangent of the helical angle, wherein this result is then subtracted from the screw pitch (D) minus the groove width (C).

6. A fixing device according to any preceding claim, wherein the shank diameter (E) is approximately 95% of the groove width (C).

7. A fixing device according to any preceding claim, further comprising an increase in height of the lead in thread from 0.00 to full height over the first half turn.

8. A fixing device according any preceding claim, further comprising a reduction in height of the lead out thread from full height to 0.00 over the last half turn.

9. A fixing device according to any preceding claim, further comprising a head (2) at one end of the shank.

10. A fixing device according to claim 9, wherein the head further comprises an annular flange.

11. A fixing device according to claim 10, wherein the annular flange further comprises radial serrations (13).

12. A fixing device according to claim 10 or 11, wherein the annular flange has a flange angle of approx 140 degrees.

13. A fixing device according to any of claims 9 to 12, wherein the shank further comprising longitudinal raised ridges (14) located at the end of the shank nearest the head.

14. A fixing device according to any of claims 9 to 13, wherein the head has an X definition for hammer insertion.

15. A fixing device according to claim 1, wherein the device has an anchor size selected from the range comprising 6mm, 8mm, 10mm, 12mm, 14mm & 16mm.

## Patentansprüche

1. Befestigungsvorrichtung zur Befestigung an Holz, Kunststoffen und mürben Substraten, wobei die Befestigungsvorrichtung aufweist: einen Schaft (1) mit einem ersten Ende (2) und einem zweiten Ende (3), wobei der Schaft spiralig verlaufende, parallele erste (5), zweite (6) und dritte (7) Gewindegänge (4) aufweist, um eine dreifach gewendelte Struktur auszubilden, wobei die ersten, zweiten und dritten parallelen Gewindegänge vom Schaft abstehen und mit Abstand zueinander angeordnet sind, und wobei alle Gewindegänge gleich hoch vom Schaft abstehen.

2. Befestigungsvorrichtung nach Anspruch 1, wobei die Nutbreite zwischen den ersten, zweiten und dritten parallelen Gewindegängen der Ankergröße der Befestigungsvorrichtung gleich ist.

3. Befestigungsvorrichtung nach einem der vorangehenden Ansprüche, wobei der Nutwinkel jedes der ersten, zweiten und dritten parallelen Gewindegänge zwischen 33° und 44° liegt.

4. Befestigungsvorrichtung nach einem der vorangehenden Ansprüche, wobei der größte Durchmesser (A) der ersten, zweiten und dritten parallelen Gewindegänge zwischen etwa 128% und 131% der Nutbreite (C) der Befestigungsvorrichtung liegt.

5. Befestigungsvorrichtung nach einem der Ansprüche 3 oder 4, wobei die Größe einer Steglücke (11) zwischen den ersten, zweiten und dritten parallelen Gewindegängen gleich dem Ergebnis einer Multiplikation der spezifischen Gewindehöhe, die etwa 15% der Nutbreite (C) ist, mit der Tangente des Nutwinkels, das dann von der Schneckensteigung (D) minus der Nutbreite (C) abgezogen wird, ist.

6. Befestigungsvorrichtung nach einem der vorangehenden Ansprüche, wobei der Schaftdurchmesser (E) etwa 95% der Nutbreite (C) ist.

7. Befestigungsvorrichtung nach einem der vorangehenden Ansprüche, ferner eine Zunahme der Höhe des einlaufenden Gewindegangs von 0,00 auf volle Höhe über dem ersten halben Umlauf aufweisend.

8. Befestigungsvorrichtung nach einem der vorangehenden Ansprüche, ferner eine Abnahme der Höhe des auslaufenden Gewindegangs von voller Höhe auf 0,00 über dem letzten halben Umlauf aufweisend.

9. Befestigungsvorrichtung nach einem der vorangehenden Ansprüche, ferner einen Kopf (2) an einem Ende des Schaftes aufweisend.

10. Befestigungsvorrichtung nach Anspruch 9, wobei der Kopf ferner einen Ringflansch aufweist.

11. Befestigungsvorrichtung nach Anspruch 10, wobei der Ringflansch ferner radiale Kerben aufweist (13).

12. Befestigungsvorrichtung nach Anspruch 10 oder 11, wobei der Ringflansch einen Flanschwinkel von etwa 140 Grad aufweist.

13. Befestigungsvorrichtung nach einem der Ansprüche 9 bis 12, wobei der Schaft ferner in Längsrichtung verlaufende, erhabene Grate (14) aufweist, die an dem Ende des Schaftes angeordnet sind, das sich dem Kopf am nächsten befindet.

14. Befestigungsvorrichtung nach einem der Ansprüche 9 bis 13, wobei der Kopf eine X-Definition zum Einstecken eines Bohrhammers aufweist.

15. Befestigungsvorrichtung nach Anspruch 1, wobei die Vorrichtung eine Ankergröße aufweist, die ausgewählt ist aus 6 mm, 8 mm, 10 mm, 12 mm, 14 mm und 16 mm.

## Revendications

1. Un dispositif de fixation pour une fixation à du bois d'oeuvre, des matières plastiques et des substrats friables, le dispositif de fixation comprenant : une tige (1) possédant une première extrémité (2) et une deuxième extrémité (3), la tige comprenant des premier (5), deuxième (6) et troisième (7) filets parallèles (4) s'étendant hélicoïdalement de façon à former une configuration à triple filetage, où les premier, deuxième et troisième filets parallèles font saillie à partir de la tige et sont en agencement espacé les uns des autres et la hauteur de chaque filet au-dessus de la tige est identique pour les trois filets.

2. Un dispositif de fixation selon la Revendication 1, où la largeur de rainure des premier, deuxième et troisième filets parallèles est égale à la taille de la cheville filetée du dispositif de fixation.

3. Un dispositif de fixation selon l'une quelconque des Revendications précédentes où l'angle hélicoïdal de chacun des premier, deuxième et troisième filets parallèles se situe entre 33° et 44°.

4. Un dispositif de fixation selon l'une quelconque des Revendications précédentes, où le diamètre principal (A) des premier, deuxième et troisième filets parallèles se situe entre approximativement 128% et 131% de la largeur de rainure (C) du dispositif de fixation.

5. Un dispositif de fixation selon la Revendication 3 ou 4, où la taille d'un espace de replat (11) entre les premier, deuxième et troisième filets parallèles est égale à la hauteur de filet spécifique, qui est approximativement 15% de la largeur de rainure (C), multipliée par la tangente de l'angle hélicoïdal, où ce résultat est ensuite soustrait du pas de vis (D) moins la largeur de rainure (C).

6. Un dispositif de fixation selon l'une quelconque des Revendications précédentes, où le diamètre de tige (E) est approximativement 95% de la largeur de rainure (C).

7. Un dispositif de fixation selon l'une quelconque des Revendications précédentes, comprenant en outre une augmentation en hauteur du filet d'entrée de 0,00 à la hauteur complète sur le premier demi-tour.

8. Un dispositif de fixation selon l'une quelconque des Revendications précédentes, comprenant en outre une réduction en hauteur du filet de sortie de la hauteur complète à 0,00 sur le dernier demi-tour.

9. Un dispositif de fixation selon l'une quelconque des Revendications précédentes, comprenant en outre une tête (2) à une extrémité de la tige.

10. Un dispositif de fixation selon la Revendication 9, où la tête comprend en outre une collerette annulaire.

11. Un dispositif de fixation selon la Revendication 10, où la collerette annulaire comprend en outre des dentelures radiales.

12. Un dispositif de fixation selon la Revendication 10 ou 11, où la collerette annulaire possède un angle de collerette d'environ 140 degrés.

13. Un dispositif de fixation selon l'une quelconque des Revendications 9 à 12, où la tige comprend en outre des arêtes saillantes longitudinales (14) placées à l'extrémité de la tige la plus proche de la tête.

14. Un dispositif de fixation selon l'une quelconque des Revendications 9 à 13, où la tête possède une définition en croix pour l'insertion d'un marteau.

15. Un dispositif de fixation selon la Revendication 1, où le dispositif possède une taille de cheville filetée sélectionnée dans l'éventail comprenant 6 mm, 8 mm, 10 mm, 12 mm, 14 mm et 16 mm.
